# DEMANDE DE BREVET EUROPEEN

(11) **EP 4 753 125 A2**
(43) Date de publication de la demande: **03.06.2026**
(21) Numéro de dépôt: 26173767.0
(22) Date de dépôt: 09.03.2021
(51) Int. Cl.: H02K 23/66

(54) **CAPOT POUR UNE MACHINE ÉLECTRIQUE TOURNANTE**

(30) Priorité: 02.04.2020 FR 2003283
(62) Demande divisionnaire de: 21709993.6
(71) Demandeur: Valeo Electrification, 95892 Cergy Pontoise (FR)
(72) Inventeur: BERNARD, Clément, 38070 ST QUENTIN FALLAVIER (FR); WALME, Benoit, 94460 VALENTON (FR); ZANELLA, Charlie, 94460 VALENTON (FR); BEAUCOTE, Sebastien, 38070 ST QUENTIN FALLAVIER (FR); FALGUIER, Manuel, 94460 VALENTON (FR); DUMONTAGNE, David, 94460 VALENTON (FR); DUMEZ, Charles, 94460 VALENTON (FR); DA CRUZ REBELO, Mario, 94460 VALENTON (FR); AZIZI-SAMIR, Abdelaziz, 94460 VALENTON (FR)
(74) Mandataire: Valeo Powertrain Systems

(57) **Abrégé**

La présente invention propose un capot pour une machine électrique tournante comportant un axe de rotation (X), le capot (42) étant destiné à être agencé sur un onduleur (36) de ladite machine (10). Le capot comporte une jupe (43) s'étendant dans une direction radiale et formant un pourtour du capot, le pourtour définissant une partie interne du capot et une zone ouverte (44) agencée dans la partie interne et comprenant au moins une ouverture axiale (45). La zone ouverte (44) s'étend sur au moins 50% de la partie interne du capot

## Description

L'invention concerne notamment un capot pour une machine électrique tournante.

L'invention trouve une application particulièrement avantageuse dans le domaine des machines électriques tournantes telles que les alternateurs, les alterno-démarreurs ou encore les machines réversibles ou les moteurs électriques. On rappelle qu'une machine réversible est une machine électrique tournante apte à travailler de manière réversible, d'une part, comme générateur électrique en fonction alternateur et, d'autre part, comme moteur électrique par exemple pour démarrer le moteur thermique du véhicule tel qu'un véhicule automobile.

Une machine électrique tournante comprend un rotor mobile en rotation autour d'un axe et un stator fixe. En mode alternateur, lorsque le rotor est en rotation, il induit un champ magnétique au stator qui le transforme en courant électrique afin d'alimenter les consommateurs électriques du véhicule et de recharger la batterie. En mode moteur, le stator est alimenté électriquement et induit un champ magnétique entraînant le rotor en rotation par exemple pour démarrer le moteur thermique.

L'ensemble formé par le rotor et le stator est agencé dans un boîtier sur lequel est disposé un onduleur. L'onduleur qui forme un ensemble électronique de la machine est classiquement protégé par un capot. Le capot présente un plateau s'étendant dans une direction radiale pour recouvrir une surface d'extrémité axiale de l'onduleur et une jupe s'étendant dans une direction axiale à partir du plateau pour recouvrir une périphérie circonférentielle de l'onduleur. Le plateau et/ou la jupe peuvent présenter des ouvertures permettant le passage d'un flux d'air de refroidissement.

Un tel capot ne présente pas une forme optimisée permettant de protéger les éléments de la machine électrique tournante sans pour autant dégrader les performances de refroidissement desdits éléments.

La présente invention vise à permettre d'éviter les inconvénients de l'art antérieur en proposant une forme de capot optimisée.

A cet effet, la présente invention a donc pour objet un capot pour une machine électrique tournante comportant un axe de rotation. Le capot est destiné à être agencé sur un onduleur de ladite machine et comporte une jupe s'étendant dans une direction radiale et formant un pourtour du capot, le pourtour définissant une partie interne du capot et une zone ouverte agencée dans la partie interne et comprenant au moins une ouverture axiale. Selon la présente invention, la zone ouverte s'étend sur au moins 50% de la partie interne du capot.

La présence d'une telle zone ouverte sur le capot permet d'améliorer nettement le passage du flux d'air de refroidissement permettant ainsi un meilleur refroidissement de l'onduleur sans pour autant impacter la tenue mécanique du capot ou la protection des éléments de la machine contre l'environnement extérieur. En effet, l'élargissement de la surface d'ouverture du capot permet, entre autre, de faciliter la circulation du flux d'air entre le capot et l'onduleur et notamment sur la surface d'extrémité axiale de l'onduleur. De plus, cette nouvelle forme de capot permet également de diminuer l'encombrement axial de la machine ainsi que son poids et de simplifier l'agencement de l'onduleur et notamment du connecteur permettant de relier l'onduleur au calculateur général du véhicule dans lequel la machine est montée.

Selon une réalisation, la zone ouverte s'étend sur au moins 70% de la partie interne du capot et notamment 84%. Cette augmentation des dimensions de la zone ouverte permet d'optimiser encore plus la forme du capot pour améliorer le refroidissement de l'onduleur.

Selon une réalisation, la zone ouverte s'étend sur toute la surface de la partie interne.

Selon une réalisation, l'ouverture axiale de la zone ouverte s'étend sur au moins 50% de la partie interne du capot. On comprend ici, que le capot présente au moins une ouverture s'étendant sur au moins 50% de la partie interne du capot. Le capot peut également présenter d'autres ouvertures.

Selon une réalisation, la zone ouverte comporte plusieurs ouvertures axiales. Cela permet d'agrandir la zone ouverte tout en gardant la possibilité d'ajouter des éléments tels que des éléments de protection ou de préhension ou de tenue mécanique dans la partie interne. Alternativement, la zone ouverte peut être formée d'une unique ouverture axiale.

Selon une réalisation, le capot comporte au moins une portion de protection axiale destinée à être agencée en vis-à-vis axialement d'au moins une connexion de phase de la machine, la portion de protection axiale s'étendant dans la partie interne. La portion de protection axiale permet de protéger la connexion électrique entre les phases du stator et l'onduleur vis-à-vis de l'environnement extérieur afin de sécuriser le fonctionnement de la machine.

Par exemple, la portion de protection axiale s'étend à partir de la jupe.

Selon une réalisation, la jupe comporte au moins une portion de protection radiale destinée à être agencée en vis-à-vis radialement d'au moins une connexion de phase de la machine. Cette portion de protection radiale permet de protéger de l'environnement extérieur la connexion de phase de la machine.

Selon une réalisation, la jupe comporte au moins deux portions de protection radiale, chacune étant destinée à être agencée en vis-à-vis radialement d'au moins une connexion de phase de la machine, et au moins une portion de liaison s'étendant circonférentiellement entre lesdites deux portions de protection radiale, la portion de liaison présentant une hauteur, dans une direction axiale, inférieure à la hauteur, dans une direction axiale, des portions de protection radiale. La différence de hauteur entre les portions de protection radiale et la portion de liaison permet d'agencer une zone d'ouverture radiale primaire dans le capot. L'ouverture radiale permet d'améliorer le refroidissement de l'onduleur. Par exemple, la zone d'ouverture radiale primaire est formée d'une ou plusieurs ouvertures radiales primaires.

Selon une réalisation, la hauteur de la portion de liaison est inférieure à la moitié de la hauteur d'une portion de protection radiale. Autrement dit, la zone d'ouverture radiale primaire présente une hauteur, dans une direction axiale, supérieure à la moitié de l'épaisseur axiale de la portion de protection radiale.

Selon une réalisation, la jupe est formée d'une succession de portions de protection radiale et de portions de liaison.

Selon une réalisation, chaque portion de protection radiale comporte une zone d'ouverture radiale secondaire. Cela permet également d'améliorer le refroidissement de la machine. Par exemple, la zone d'ouverture radiale secondaire est formé d'une ou plusieurs ouvertures radiales secondaires.

Par exemple, la surface de la zone d'ouverture radiale secondaire est comprise entre 15% et 25% de la surface de la portion de protection associée. Cela permet d'améliorer le refroidissement de la machine tout en garantissant la tenue mécanique du capot ainsi qu'une protection de la machine à l'environnement extérieur.

Selon une réalisation, la jupe forme un pourtour fermé. Cela permet d'améliorer la tenue mécanique du capot.

Selon une réalisation, le capot comporte en outre au moins une portion de fixation, la portion de fixation étant destinée à coopérer avec un élément de fixation pour monter le capot sur un onduleur de la machine électrique tournante, la portion de fixation s'étendant dans la partie interne.

Par exemple, la portion de fixation axiale s'étend à partir de la jupe ou à partir de la portion de protection axiale ou à partir du moyen de préhension.

Selon une réalisation, la portion de fixation s'étend dans une direction radiale et comporte une ouverture permettant le passage de l'élément de fixation.

Selon une réalisation, le capot comporte, en outre, au moins un moyen de préhension s'étendant dans la partie interne. Ce moyen de préhension permet, lors du procédé d'assemblage de la machine, de simplifier l'agencement du capot sur l'onduleur avant leur fixation ensemble.

Par exemple, le moyen de préhension s'étend à partir de la jupe ou à partir de la portion de fixation ou à partir de la portion de protection axiale.

Selon une réalisation, le moyen de préhension est formé d'une portion plane s'étendant dans un plan radial. Cela permet de pouvoir déplacer le capot sans augmenter l'encombrement axial de la machine. Cela peut également permettre d'avoir une zone d'étiquetage pour inscrire les références de la machine.

Selon une réalisation, un décroché est formé à au moins une extrémité du moyen de préhension de sorte que ledit moyen s'étende axialement à distance de la jupe. Cela permet de réduire la hauteur axiale de la jupe pour améliorer le refroidissement de la machine.

La présente invention a également pour objet une machine électrique tournante comprenant un onduleur et un capot tel que précédemment décrit, le capot étant monté sur l'onduleur. La machine électrique tournante peut, avantageusement, former un alternateur, un alterno-démarreur, une machine réversible ou un moteur électrique.

Selon une réalisation, l'onduleur comporte un étage de puissance permettant d'alimenter des phases d'un stator de la machine et/ou de redresser le courant sortant desdites phases. L'onduleur comporte, en outre, un étage de commande permettant de piloter la machine.

Selon une réalisation, l'onduleur comporte au moins une plaque de dissipation thermique, ladite plaque formant au moins partiellement une extrémité axiale dudit onduleur et étant agencée au moins en partie en vis-à-vis de la zone ouverte. La plaque de dissipation thermique permet de protéger les éléments de l'onduleur de l'environnement extérieur et également d'améliorer le refroidissement de l'onduleur par conduction.

Selon une réalisation, l'onduleur comporte un bloc de capacité et la zone ouverte est agencée de sorte à être au moins en partie alignée axialement avec le bloc de capacité.

Selon une réalisation la machine comporte un boitier agencé pour entourer, au moins partiellement, un stator et un rotor de ladite machine, l'onduleur est agencé axialement entre le capot et le boitier.

Selon une réalisation, la machine électrique tournante comporte, en outre, un obturateur agencé à une extrémité axiale de l'onduleur, l'obturateur comportant une portion d'extension radiale agencée en vis-à-vis d'un bloc de capacité de l'onduleur. La portion d'extension radiale permet de protéger le bloc de capacité de l'environnement extérieur.

Selon une réalisation la machine comporte un boitier agencé pour entourer, au moins partiellement, un stator et un rotor de ladite machine, l'obturateur étant agencé axialement entre le boitier et l'onduleur. L'obturateur permet de recouvrir au moins partiellement des ouvertures axiales agencées dans le boitier. L'obturateur permet alors d'éviter qu'un flux d'air de refroidissement déjà chauffé par le rotor ou le stator ne circule dans l'onduleur.

Selon une réalisation, l'étage de puissance et l'étage de commande sont superposés axialement de sorte à définir un passage de refroidissement entre eux, la zone d'ouverture radiale primaire étant notamment agencée au moins partiellement en vis-à-vis dudit passage de refroidissement.

Selon une réalisation, la machine comporte un stator comprenant au moins un terminal de phase et l'onduleur comprend au moins un module de puissance comprenant au moins un terminal de puissance, le terminal de puissance étant connecté électriquement au terminal de phase pour former une connexion de phase.

La présente invention pourra être mieux comprise à la lecture de la description détaillée qui va suivre, d'exemples de mise en œuvre non limitatifs de l'invention et de l'examen des dessins annexés.
La [Figure 1] représente, schématiquement et partiellement, une vue en coupe d'une machine électrique tournante selon un exemple de l'invention.
La [Figure 2] représente, schématiquement et partiellement, une vue en perspective d'un exemple de capot selon l'invention monté sur un onduleur.
La [Figure 3] représente, schématiquement et partiellement, une vue en perspective du capot de la figure 2.
La [Figure 4] représente, schématiquement et partiellement, une vue en perspective d'un exemple d'obturateur selon l'invention.
La [Figure 5] représente, schématiquement et partiellement, une vue en perspective d'un autre exemple de capot selon l'invention.

Les éléments identiques, similaires ou analogues conservent les mêmes références d'une figure à l'autre. On notera également que les différentes figures ne sont pas nécessairement à la même échelle. De plus, les exemples de réalisation qui sont décrits dans la suite ne sont nullement limitatifs. On pourra notamment imaginer des variantes de l'invention ne comprenant qu'une sélection de caractéristiques décrites par la suite isolées des autres caractéristiques décrites.

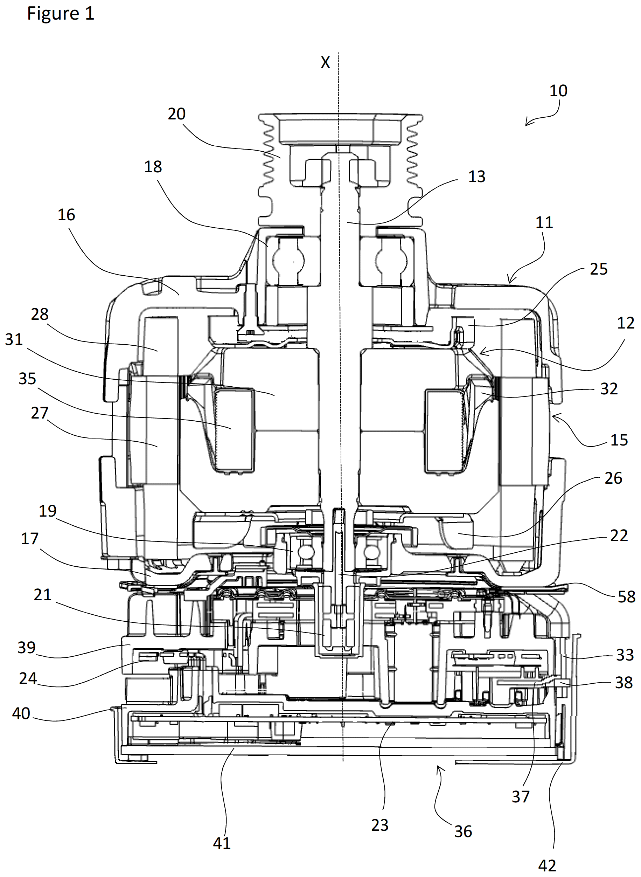

La figure 1 représente un exemple de machine électrique tournante 10 compacte et polyphasée, notamment pour véhicule tel qu'un véhicule automobile ou un drone. Cette machine 10 transforme de l'énergie mécanique en énergie électrique, en mode alternateur, et peut fonctionner en mode moteur pour transformer de l'énergie électrique en énergie mécanique. Cette machine électrique tournante 10 est, par exemple, un alternateur, un alterno-démarreur, une machine réversible ou un moteur électrique.

Dans cet exemple, la machine 10 comporte un boitier **11** sur lequel est monté un onduleur 36. A l'intérieur de ce boitier **11,** elle comporte, en outre, un arbre 13, un rotor 12 solidaire en rotation de l'arbre 13 et un stator 15 entourant le rotor 12. Le mouvement de rotation du rotor 12 se fait autour d'un axe X. Dans la suite de la description, la direction axiale correspond à l'axe X, traversant en son centre l'arbre 13, alors que les orientations radiales correspondent à des plans concourants, et notamment perpendiculaires, à l'axe X. Pour les directions radiales, la dénomination intérieure correspondant à un élément orienté vers l'axe, ou plus proche de l'axe par rapport à un second élément, la dénomination extérieure désignant un éloignement de l'axe.

Dans cet exemple, le boitier 11 comporte un flasque avant 16 et un flasque arrière 17 qui sont assemblés ensemble. Ces flasques 16, 17 sont de forme creuse et portent, chacun, centralement un palier accouplé à un roulement à billes 18, 19 respectif pour le montage à rotation de l'arbre 13. En outre, le boitier 11 comporte des moyens de fixation (non représenté) permettant le montage de la machine électrique tournante 10 dans le véhicule.

Un organe d'entraînement tel qu'une poulie 20 peut être fixé sur une extrémité avant de l'arbre 13. Cet organe permet de transmettre le mouvement de rotation à l'arbre ou à l'arbre de transmettre son mouvement de rotation à la courroie. Dans la suite de la description, les dénominations avant/arrière se réfèrent à cet organe. Ainsi une face avant est une face orientée en direction de l'organe alors qu'une face arrière est une face orientée en direction opposée dudit organe.

L'extrémité arrière de l'arbre 13 porte, ici, des bagues collectrices 21 appartenant à un collecteur 22. Un porte-balais (non représenté) comprend des balais disposés de façon à frotter sur les bagues collectrices 21. Le porte-balais est relié à l'onduleur 36 et notamment à un module de commande 23 de l'onduleur.

Le flasque avant 16 et le flasque arrière 17 peuvent comporter des ouvertures sensiblement latérales pour le passage d'un flux d'air en vue de permettre le refroidissement de la machine 10 par circulation d'air engendrée par la rotation d'un ventilateur avant 25 agencé sur une face axiale avant du rotor 12 et d'un ventilateur arrière 26 agencé sur une face axiale arrière dudit rotor.

Dans cet exemple, le rotor 12 est un rotor à griffe comportant deux roues polaires 31. Chaque roue polaire 31 est formée d'un plateau orienté transversalement, d'une pluralité de griffes formants des pôles magnétiques et d'un noyau cylindrique. Le rotor comporte une bobine 35 enroulée autour du noyau. Par exemple, les bagues collectrices 21 appartenant au collecteur 22 sont reliées par des liaisons filaires à ladite bobine 35. Le rotor 12 peut également comporter des éléments magnétiques 32, tels que des aimants permanents, interposés entre deux griffes adjacentes. Alternativement, le rotor peut être formé d'un paquet de tôles logeant des aimants permanents formant les pôles magnétiques.

Dans cet exemple de réalisation, le stator 15 comporte un corps 27 formé d'un paquet de tôles doté d'encoches, équipées d'isolant d'encoche pour le montage d'un bobinage électrique 28. Le bobinage traverse les encoches du corps 27 et forment un chignon avant et un chignon arrière de part et d'autre du corps du stator. Par ailleurs, le bobinage 28 est formé d'une ou plusieurs phases comportant au moins un conducteur électrique. Chaque phase comporte une extrémité formant une sortie de phase 33 qui est reliée électriquement à l'onduleur 36.

L'onduleur 36 qui est ici monté sur le boitier 11 forme l'ensemble électronique de la machine. L'onduleur comporte un étage de puissance permettant de recevoir ou de fournir un signal électrique de puissance aux phases électrique du bobinage 28. L'étage de puissance comprend au moins un module de puissance 24 comportant un terminal de puissance 37 agencé pour être connecté électriquement à une sortie de phase 33 pour former une connexion de phase 38. Le module de puissance forme un pont redresseur de tension pour transformer la tension alternative générée par les phases du stator en une tension continue et/ou, à l'inverse, pour transformer une tension continue en une tension alternative pour alimenter les phases du stator. L'onduleur comporte également un étage de commande comprenant un module de commande 23 permettant notamment de réguler la tension injectée via le porte-balais au rotor 12 et de faire l'interface avec un calculateur externe du véhicule.

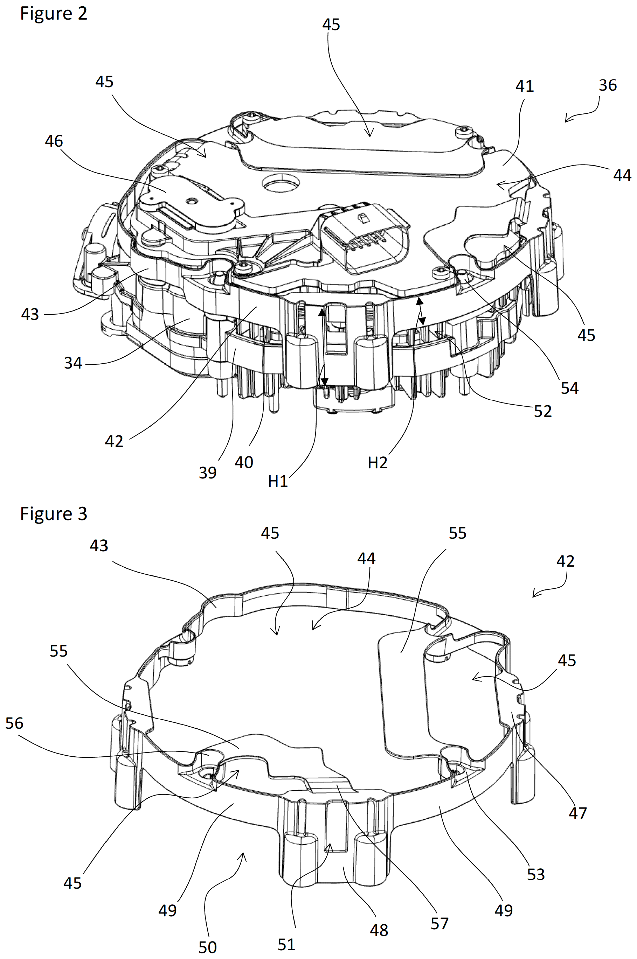

Dans l'exemple illustré sur les figures 1 et 2, l'étage de puissance et l'étage de commande sont empilés l'un sur l'autre dans une direction axiale. Plus particulièrement dans cet exemple, l'étage de puissance comporte un dissipateur thermique, dit premier dissipateur 39, monté sur le boitier 11, le module de puissance 24 étant monté sur ledit premier dissipateur. De plus, l'étage de commande comporte un dissipateur thermique, dit second dissipateur 40, monté sur le premier dissipateur 39, le module de commande 23 étant monté sur ledit second dissipateur. Par exemple, les deux dissipateurs thermiques sont chacun formé d'un matériau conducteur thermique tel que du métal.

L'onduleur 36 comporte également un moins une capacité (non représentée) permettant de réaliser un filtrage des signaux électriques de l'onduleur. La capacité est agencée dans un bloc de capacité 34 qui peut contenir une ou plusieurs capacités. Le bloc de capacité est agencé par exemple dans un logement du premier dissipateur 39. Ledit logement peut être fermé par le second dissipateur thermique 40. Le bloc de capacité 34 est, ici, agencé entre les deux dissipateurs thermiques afin d'améliorer le refroidissement dudit bloc.

La machine 10 comporte, en outre, un capot 42 monté sur l'onduleur 36. Par exemple, le capot est formé d'un matériau électriquement isolant tel que du plastique. Toujours par exemple, le capot est monobloc et notamment formé d'un seul tenant par exemple par moulage.

Le capot 42 comporte une jupe 43 s'étendant dans une direction radiale et formant un pourtour du capot. Autrement dit, le pourtour forme une périphérie externe à l'intérieur de laquelle est défini une partie interne du capot. Le capot 42 présente une zone ouverte 44 agencée dans la partie interne. La zone ouverte 44 s'étend sur au moins 50%, et notamment au moins 70%, d'une surface d'extrémité axiale de la partie interne du capot 42. La surface d'extrémité axiale de la partie interne du capot est définie comme étant l'aire délimitée par le pourtour de la jupe. Autrement dit, le capot 42 est fermé axialement sur une surface inférieure à la moitié de la surface totale d'extrémité axiale dudit capot.

Dans l'exemple illustré sur la figure 2, la zone ouverte 44 s'étend sur une surface égale à 84% de la surface d'extrémité axiale de la partie interne du capot 42. La température de l'onduleur 36 à une vitesse donnée, avec cet exemple de pourcentage d'ouverture de la zone ouverte, est en moyenne de l'ordre de 143.2°C alors que la température d'un onduleur de l'art antérieur comportant un capot classique qui présente un pourcentage d'ouverture inférieur à 20% est de l'ordre de 147°C. Avec cet exemple de réalisation de l'invention, la température de l'onduleur 36 à une vitesse donnée a ainsi diminué de 3.8°C par rapport à un capot de l'art antérieur.

La zone ouverte 44 peut être agencée de sorte à être au moins en partie alignée axialement avec le bloc de capacité 34. De plus dans cet exemple, l'onduleur 36 comporte une plaque de dissipation thermique 41 agencée pour recouvrir l'étage de commande. Par exemple, la plaque de dissipation 41 est formée d'un matériau métallique. Plus précisément, de la colle thermique peut être agencée entre la partie du second dissipateur thermique 40 en contact avec le bloc de capacité 34 et la plaque de dissipation thermique 41. Cela permet d'améliorer le refroidissement du bloc de capacité par conduction. Le fait que le capot 42 soit ouvert axialement sur au moins 50% de son aire et notamment au-dessus du bloc de capacité 34 permet d'autant plus d'améliorer le refroidissement dudit bloc. En effet, la surface d'extrémité axiale arrière de la plaque de dissipation 41 est brassée par une plus grande quantité de flux d'air de refroidissement et cela permet également d'éviter que de l'air chaud stagne axialement entre le capot 42 de ladite plaque 41.

La zone ouverte 44 est agencée en vis-à-vis de la plaque de dissipation thermique 41. De plus, ici, un connecteur de signal 46 est agencé pour traverser ladite plaque 41 et la zone ouverte 44 afin de relier le module de commande 23 à un calculateur externe du véhicule pour le pilotage de la machine.

La zone ouverte 44 est formée d'au moins une ouverture axiale 45. Dans l'exemple illustré sur les figures 2 et 3, la zone ouverte comprend trois ouvertures axiales 45. Les ouvertures 45 sont ici de forme et de taille différentes.

Le capot 42 peut comporter au moins une portion de protection axiale 47 agencée en vis-à-vis axialement d'au moins une connexion de phase 38. La portion de protection axiale s'étendant dans la partie interne à partir de la jupe 43. Ladite portion 47 s'étendant dans une direction radiale. Dans l'exemple illustré sur la figure 2, le stator 15 comporte six sorties de phase 33 regroupées deux par deux le long de la circonférence de la machine. Ainsi, ici, le capot 42 comporte trois portions de protection axiale 47, chacune étant agencée en vis-à-vis axialement de deux connexions de phase 38. Alternativement, chaque portion de protection axiale pourrait être agencée en vis-à-vis d'une unique connexion de phase ou d'un nombre de connexion de phase supérieur à deux.

La jupe 43 s'étend circonférentiellement de sorte à entourer au moins partiellement l'onduleur 36 et notamment l'étage de commande. La jupe 43 comporte au moins deux portions de protection radiale 48 et au moins une portion de liaison 49. Chaque portion de protection radiale 48 est agencée en vis-à-vis radialement d'au moins une connexion de phase 38 de la machine. De préférence, chaque portion de protection axiale 47 s'étend à partir d'une portion de protection radiale 48. Dans l'exemple illustré sur la figure 2, la jupe 43 comporte trois portions de protection radiale 48, chacune étant agencée en vis-à-vis radialement de deux connexions de phase 38. Alternativement, chaque portion de protection radiale pourrait être agencée en vis-à-vis d'une unique connexion de phase ou d'un nombre de connexion de phase supérieur à deux.

La portion de liaison 39 s'étend circonférentiellement entre deux portions de protection radiale 48. Ainsi, la jupe est formée d'une succession de portions de protection radiale 48 et de portions de liaison 49. Les portions de liaison 49 s'étendent notamment de manière à être alignées axialement les unes par rapport aux autres. Par exemple ici, la jupe 43 forme un pourtour annulaire fermé.

Comme illustré sur la figure 3, la portion de liaison 49 présente, ici, une hauteur H2 inférieure à la hauteur H1 respective des portions de protection radiale 48, les hauteurs H1, H2 étant mesurées dans une direction axiale. Une extrémité axiale de la portion de liaison 49 est, de préférence, agencée de sorte à être alignée dans un plan radial avec une extrémité axiale des portions de protection radiales 48 adjacentes.

Dans l'exemple illustré sur la figure 3, la hauteur H2 de la portion de liaison 49 est inférieure à la moitié de la hauteur H1 des portions de protection radiale 48.

La différence de hauteur entre les portions de protection radiale 48 et la portion de liaison 49 permet de former une zone d'ouverture radiale primaire dans le capot 42. Par exemple, la zone d'ouverture radiale primaire est formée d'une ou plusieurs ouvertures radiales primaires 50. Deux portions de protection radiales 48 sont séparées l'une de l'autre à la fois par une portion de liaison 49 et par une ouverture radiale primaire 50. L'empilement de l'étage de puissance et de l'étage de commande définit un passage de refroidissement 52 entre lesdits étages visible sur la figure 2. Chaque ouverture radiale primaire 50 est agencée au moins partiellement en vis-à-vis dudit passage de refroidissement 52.

Dans l'exemple des figures 2 et 3, chaque portion de protection radiale 48 peut comporter une zone d'ouverture radiale secondaire par exemple formée d'une ou plusieurs ouvertures radiales secondaires 51. Les ouvertures radiales secondaires permettent d'améliorer le refroidissement de l'onduleur 36 et des connexions de phase 38 tout en permettant une protection desdites connexions vis-à-vis de l'environnement extérieur de la machine. Par exemple, la surface de la zone d'ouverture radiale secondaire est comprise entre 15% et 25% de la surface de la portion de protection radiale 48 associée.

Plus précisément dans l'exemple illustré ici, chaque ouverture radiale secondaire 51 s'étend à partir d'une extrémité axiale de la jupe et notamment à partir de la portion de protection axiale 47 associée. Toujours dans cet exemple, la zone d'ouverture radiale secondaire est formée de trois ouvertures radiales secondaires 51. Deux desdites ouvertures 51 sont, ici, agencées axialement entre une connexion de phase 38 respective et la portion de protection axiale 47. L'autre ouverture 51 est, ici, agencée radialement entre deux connexions de phase 38.

Le capot 42 peut comporter plusieurs portions de fixation 53 agencées pour monter ledit capot sur l'onduleur 36. Pour cela, chaque portion de fixation présente par exemple une ouverture à travers laquelle est inséré un élément de fixation 54. L'assemblage entre le capot et l'onduleur est notamment fait par vissage ou clispage. Dans l'exemple illustré sur la figure 3, chaque portion de fixation 53 s'étend radialement à partir de la jupe 43 dans la partie interne de capot 42 et notamment à partir d'une portion de liaison 49. Chaque portion de fixation 53 peut être partiellement entourée d'un muret 56 s'étendant axialement notamment pour rigidifier ladite portion de fixation.

Le capot 42 peut comporter un moyen de préhension 55 permettant, lors du procédé d'assemblage de la machine, de simplifier l'agencement du capot sur l'onduleur 36 avant leur fixation ensemble. Dans l'exemple illustré sur la figure 3, le moyen de préhension 55 est formé d'une portion plane s'étendant dans un plan radial dans la partie interne du capot 42. Cela permet notamment d'utiliser un dispositif de préhension automatique venant positionner le capot 42 sur l'onduleur 36. Plus précisément dans cet exemple, le capot comporte deux moyens de préhension 55. Le premier moyen de préhension s'étend entre deux portions de fixation 53 et le deuxième moyen de préhension s'étend entre une portion de fixation 53 et une portion de protection axiale 47. Par exemple, chaque moyen de préhension 55 s'étend axialement à distance axiale non nulle de la jupe 43. Autrement dit, ici, chaque moyen de préhension 55 s'étend dans un plan radial ne comprenant pas la jupe 43. Pour cela, chaque moyen de préhension 55 s'étend plus particulièrement à partir d'une extrémité axiale du muret 56 entourant partiellement la portion de fixation 53 associée ou à partir d'un décroché axial 57 formé entre la portion de protection axiale 47 et ledit moyen 55.

Comme illustré sur la figure 3, l'extrémité axiale de la machine 10 est formée ponctuellement par plusieurs éléments agencés dans différents plans radiaux : le connecteur de signal 46, la plaque de dissipation thermique 41, le capot 42 et notamment les moyens de préhension 55 du capot.

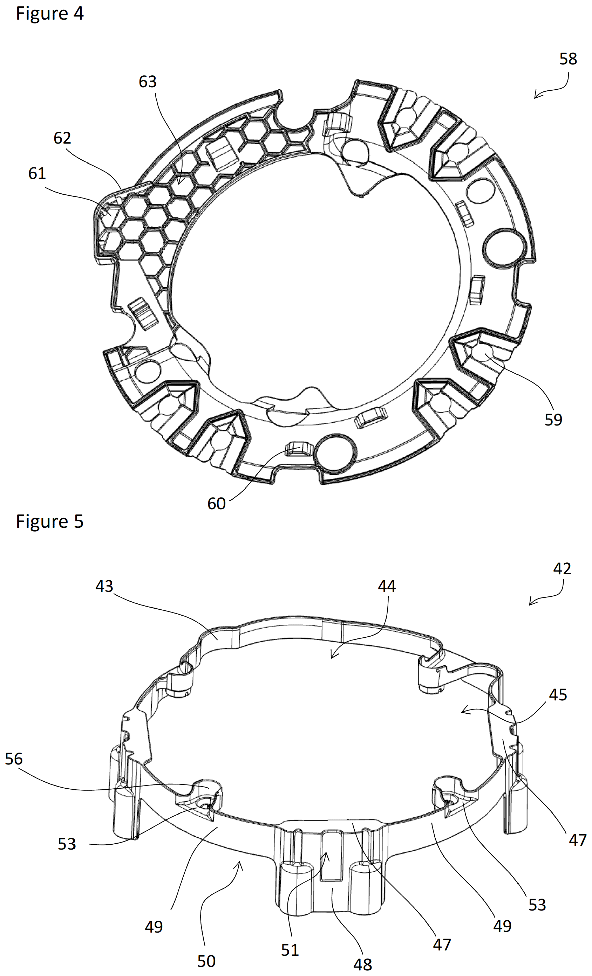

Comme visible sur les figures 1 et 4, la machine électrique tournante 10 comporte, en outre, un obturateur 58 agencé axialement entre l'onduleur 36 et le boitier 11. Plus précisément ici, l'obturateur est monté en sandwich entre le flasque arrière 17 et le premier dissipateur thermique 39 et peut comporter des ouvertures de passage d'un élément de fixation de l'onduleur 36 avec le boitier 11. L'obturateur peut, en outre, comporter au moins un amortisseur 60 permettant de solidifier le montage de l'obturateur.

Par exemple, l'obturateur 58 présente une forme annulaire et est agencé de manière à recouvrir au moins partiellement des ouvertures axiales formées dans le flasque arrière 17. L'obturateur 58 comporte des ouvertures 59 permettant le passage des sorties de phase 33 du stator.

Dans l'exemple illustré sur la figure 4, l'obturateur 58 comporte une portion d'extension radiale 61 agencée de manière alignée dans une direction axiale avec le bloc de capacité 34 de l'onduleur 36. La portion d'extension radiale 61 s'étendant notamment dans une direction radiale de sorte à former une saillie radiale externe de l'obturateur. Par exemple, la portion d'extension radiale 61 est entourée sur sa périphérie externe d'un muret 62 s'étendant axialement.

L'obturateur est notamment formé d'un matériau électriquement isolant tel que du plastique. Par exemple, au moins une portion de l'obturateur 58 comporte une zone rainurée permettant de rigidifier ledit obturateur. La zone rainurée s'étend notamment sur le portion d'extension radiale 61.

La figure 5 illustre un autre exemple de capot 42 ne comprenant pas de portion formant spécifiquement un moyen de préhension 55. Les autres caractéristiques et éléments formant ce capot sont identiques ou essentiellement identiques à ceux exposés dans la description du premier exemple de capot décrit en référence aux figures 2 et 3.

Ainsi, dans ce deuxième exemple de capot 42, la zone ouverte 44 s'étend sur au moins 95% de la surface d'extrémité axiale de la partie interne du capot 42. Autrement dit ici, toute la surface de la partie interne est ouverte à l'exception des zones formant les portions de protection axiale 47 et des zones formant les portions de fixation 53. Dans cet exemple, la zone ouverte 44 est formée d'une unique ouverture axiale 45.

Dans une variante de ce deuxième exemple de réalisation non représenté, **il** est envisageable de modifier les portions de fixation 53 ainsi que les portions de protection axiale 47 de sorte à ce qu'elles ne s'étendent pas dans la partie interne du capot et ainsi d'encore augmenter le pourcentage d'ouverture de la zone ouverte pour obtenir un pourcentage d'ouverture égal à 100%.

La présente invention trouve des applications en particulier dans le domaine des alternateurs, alterno-démarreurs ou des machines réversibles mais elle pourrait également s'appliquer à tout type de machine tournante.

Bien entendu, la description qui précède a été donnée à titre d'exemple uniquement et ne limite pas le domaine de la présente invention dont on ne sortirait pas en remplaçant les différents éléments par tous autres équivalents.

## Revendications

1. Capot pour une machine électrique tournante comportant un axe de rotation (X), le capot (42) étant destiné à être agencé sur un onduleur (36) de ladite machine (10) et comportant :
a. une jupe (43) s'étendant dans une direction radiale et formant un pourtour du capot, le pourtour définissant une partie interne du capot et
b. une zone ouverte (44) agencée dans la partie interne et comprenant au moins une ouverture axiale (45),
le capot (42) étant **caractérisé en ce que** la zone ouverte (44) s'étend sur au moins 50% de la partie interne du capot.

2. Capot selon la revendication précédente, **caractérisé en ce que** la zone ouverte (44) s'étend sur au moins 70% de la partie interne du capot (42) et notamment 84%.

3. Capot selon l'une quelconque des revendications précédentes, **caractérisé en ce que** la zone ouverte (44) comporte plusieurs ouvertures axiales (45).

4. Capot selon l'une quelconque des revendications précédentes, **caractérisé en ce qu'**il comporte au moins une portion de protection axiale (47) destinée à être agencée en vis-à-vis axialement d'au moins une connexion de phase (38) de la machine (10), la portion de protection axiale (47) s'étendant dans la partie interne.

5. Capot selon l'une quelconque des revendications précédentes, **caractérisé en ce que** la jupe (43) comporte au moins deux portions de protection radiale (48), chacune étant destinée à être agencée en vis-à-vis radialement d'au moins une connexion de phase (38) de la machine (10), et au moins une portion de liaison (49) s'étendant circonférentiellement entre lesdites deux portions de protection radiale (48), la portion de liaison présentant une hauteur (H2), dans une direction axiale, inférieure à la hauteur (H1), dans une direction axiale, des portions de protection radiale.

6. Capot selon l'une quelconque des revendications précédentes, **caractérisé en ce que** la jupe (43) forme un pourtour fermé.

7. Capot selon l'une quelconque des revendications précédentes, **caractérisé en ce qu'**il comporte en outre au moins une portion de fixation (53), la portion de fixation étant destinée à coopérer avec un élément de fixation (54) pour monter le capot (42) sur un onduleur (36) de la machine électrique tournante (10), la portion de fixation (53) s'étendant dans la partie interne.

8. Capot selon l'une quelconque des revendications précédentes, **caractérisé en ce qu'**il comporte, en outre, au moins un moyen de préhension (55) s'étendant dans la partie interne.

9. Machine électrique tournante comprenant un onduleur (36) et un capot (42) selon l'une quelconque des revendications précédentes, le capot étant monté sur l'onduleur.

10. Machine selon la revendication précédente, **caractérisée en ce que** l'onduleur (36) comporte un bloc de capacité (34) et **en ce que** la zone ouverte (44) est agencée de sorte à être au moins en partie alignée axialement avec le bloc de capacité.

11. Machine selon la revendication 10 ou 9, **caractérisée en ce que** l'onduleur (36) comporte au moins une plaque de dissipation thermique (41), ladite plaque formant au moins partiellement une extrémité axiale dudit onduleur (36) et étant agencée au moins en partie en vis-à-vis de la zone ouverte (44).

12. Machine selon l'une quelconque des revendications 9 à 11, **caractérisée en ce qu'**elle comporte, en outre, un obturateur (58) agencé à une extrémité axiale de l'onduleur (36), l'obturateur comportant une portion d'extension radiale (61) agencée en vis-à-vis d'un bloc de capacité (34) de l'onduleur.
